# EUROPEAN PATENT SPECIFICATION

(11) **EP 2 267 639 B1**
(45) Date of publication and mention of the grant of the patent: **20.04.2016**
(21) Application number: 10166381.3
(22) Date of filing: 17.06.2010
(51) Int. Cl.: G06K 15/02, G06K 15/00

(54) **Image forming apparatus**
Bilderzeugungsvorrichtung
Appareil de formation d'images

(30) Priority: 24.06.2009 JP 2009150294
(43) Date of publication of application: 29.12.2010
(73) Proprietor: Konica Minolta Business Technologies, Inc., Tokyo 100-0005 (JP)
(72) Inventor: Nakata, Hiroshi, Tokyo Tokyo 100-0005 (JP)
(74) Representative: Gille Hrabal

(56) References cited:
- US-A1- 2002 097 423
- US-A1- 2004 057 069

## Description

### RELATED APPLICATION

This application claims priority from Japanese patent application No. 2009-150294 filed with Japan Patent Office on June 24,2009, which is incorporated hereinto by reference.

### TECHNICAL FIELD

The present invention relates to an image forming apparatus, particularly to power saving control in an image forming apparatus.

### BACKGROUND

In the image forming apparatus using an electrophotographic process, light from an exposure apparatus is applied to the photoreceptor drum uniformly charged by a charging device to form an electrostatic latent image. A development apparatus attaches toner to the electrostatic latent image and develops the same into a toner image. The toner image is transferred to a sheet from the photoreceptor drum through an intermediate transfer belt, and is heated and pressed by a fixing apparatus, whereby the toner image is fixed on the sheet.

US 2002/0097423-A1 discloses a printer which performs efficient power save control by keeping track of the condition of each client. US2004/0057069-A1 discloses an image data processing apparatus shifting to a power saving mode on whether a particular process is in progress on an image processing apparatus.

In the aforementioned image forming apparatus, the fixing apparatus heats the toner image transferred onto the sheet to an appropriate temperature. This requires such a heating source as a heating roller and heating lamp to be kept at a prescribed temperature level, and much standby power must be consumed even when no job is executed. Further, on such a display panel as a liquid crystal display apparatus (LCD: Liquid Crystal Display), a light source including a backlight must be turned on. This again requires standby power to be consumed even if no job is performed. To solve this problem, power saving control is provided in such a way that the image forming apparatus is placed into the power save mode wherein standby power is reduced, if a job execution signal is not received for a prescribed period of time.

Regarding such power saving control, the following Unexamined Japanese Patent Application Publication No. Hei 8(1996)-25757 discloses a technique wherein hosts are registered in advance by using an input interface of a printer apparatus, and the response request message of the ICMP (Internet Control Management Protocol) is sent to all the hosts registered in the printer apparatus. If there is no response for a prescribed period of time without the data being received, the mode is set to the power save mode or power is turned off

In a company and other organizations, the image forming apparatus is used as a network printer so that jobs from a plurality of computer apparatuses can be processed. However, computer apparatuses have various forms of attributes. Some are used frequently, but others are not. The states of the computer apparatuses are also widely varied. Some apparatuses are operating in the normal mode, and others are placed in the log-off mode or power off mode. However, in conventional image forming apparatuses, conditions for shifting into the power save mode have been determined, independently of the attribute and state of the computer apparatus. This method has failed to achieve an effective reduction of standby power consumption.

The attributes of the uses of computer apparatuses are also varied. Some computers are utilized by the users (e.g., those working in managerial positions) of higher priority, while others are employed by the users (e.g., those working in ordinary clerical positions) of lower priority. However, in conventional image forming apparatuses, the conditions for shift to the power save mode is determined, independently of the user attributes. This fails to achieve an effective reduction in the standby power consumption.

Further, when a network is connected with a plurality of image forming apparatuses, one of the image forming apparatuses is working in the normal mode, jobs can be processed if other image forming apparatuses are placed in the power save mode. However, in conventional image forming apparatuses, conditions for shift to the power save mode have been determined, independently of the presence or absence of other image forming apparatuses. This arrangement cannot ensure an effective reduction in the standby power consumption.

Further, the Unexamined Japanese Patent Application Publication No. Hei 8 (1996)-25757, only handles the management of computer apparatuses having been registered. This is accompanied by such a problem that the operation mode has to be placed in the power save mode, even if there is a job request from a computer apparatus not registered.

In view of the problems described above, it is the major object of the present invention to provide an image forming apparatus capable of effective reduction in the standby power consumption.

### SUMMARY

(1) To achieve at least one of the abovementioned objects, an image forming apparatus connected to a plurality of computer apparatuses via a network reflecting one aspect of the present invention comprises, a detecting section detecting the state of at least one prescribed computer apparatus out of the plurality of the computer apparatuses; and a power supply control section controlling a power mode based on the state of the prescribed computer apparatus detected by the detecting section, according to independent claim 1 and dependent claims 2-10.
(2) In the abovementioned image forming apparatus of item 1, wherein the power supply control section controls a shift of the power mode to a power save mode reducing a power consumption below a power consumption in the normal mode.
(3) In the abovementioned image forming apparatus of item1, wherein the detecting section detects whether the prescribed computer is in an operating state or not.
(4) In the abovementioned image forming apparatus of item1, wherein the detecting section detects whether the prescribed computer is on a mode which is set in the case when the prescribed computer is in a nonuse state.
(5) In the abovementioned image forming apparatus of item1, further comprising; a rank determining section which determines a rank of each computer apparatuses based on a job history information of the each computer apparatuses and specifies the prescribed computer from the plurality of computer apparatuses according to the rank.
(6) In the abovementioned image forming apparatus of item1, wherein the power save mode comprises a first power save mode, and a second power save mode reducing a power consumption below a power consumption in the first power save mode; wherein the power supply control section determines whether to shift of the power save mode to the first power save mode or to the second power save mode, based on the state of the prescribed computer.
(7) In the abovementioned image forming apparatus of item1, wherein the detecting section detects the state of the prescribed computer apparatus and other computer apparatuses than the prescribed computer apparatus; the power supply control section controlling the shift to a power save mode, based on the combination of the state of the prescribed computer apparatus and the state of the other computer apparatuses expect the prescribed computer apparatus.
(8) In the abovementioned image forming apparatus of item1, wherein the detects section detecting the state of other image forming apparatus connected to the network; and, the power supply control section controls the shift of the power mode to a power save mode, based on a combination of the state of the prescribed computer apparatus and the state of the other image forming apparatus.

### BRIEF DESCRIPTION OF THE DRAWINGS

Fig. 1 is a diagram schematically representing the structure of a control system as a first embodiment of the present invention.
Fig. 2 is a block diagram representing the structure of a computer apparatus as a first embodiment of the present invention.
Fig. 3 is a block diagram representing the structure of the image forming apparatus as a first embodiment of the present invention.
Fig. 4 is a flow chart representing the procedure for changing the mode according to job reception signal in the image forming apparatus as a first embodiment of the present invention.
Fig. 5 is a flow chart representing the procedure for acquiring the state of the apparatus in the image forming apparatus as a first embodiment of the present invention.
Fig. 6 is a flow chart representing the procedure for the image forming apparatus as a first embodiment of the present invention.
Fig. 7 is a flow chart representing the procedure for determining the mode in the image forming apparatus as a first embodiment of the present invention.
Fig. 8 is a flow chart representing the procedure for determining the mode in the image forming apparatus as a first embodiment of the present invention.
Fig. 9 is a flow chart representing the procedure for determining the mode in the image forming apparatus as a first embodiment of the present invention.
Fig. 10 is a flow chart representing the procedure for determining the rank of the computer apparatus based on the presence or absence of a job in the image forming apparatus as a first embodiment of the present invention.
Fig. 11 is a diagram representing an example of determining the rank of the computer apparatus based on the presence or absence of a job in the image forming apparatus as a first embodiment of the present invention.
Fig. 12 is a flow chart representing the procedure for determining the rank of the computer apparatus based on the number of sending of job in the image forming apparatus as a first embodiment of the present invention.
Fig. 13 is a diagram representing an example of determining the rank of the computer apparatus based on the number of sending of job in the image forming apparatus as a first embodiment of the present invention.
Fig. 14 is a flow chart representing the procedure for changing the mode according to job reception signal in the image forming apparatus as a second embodiment of the present invention.
Fig. 15 is a flow chart representing the procedure for acquiring the state of the apparatus in the image forming apparatus as a second embodiment of the present invention.
Fig. 16 is a flow chart representing the procedure for determining the mode in the image forming apparatus as a second embodiment of the present invention.
Fig. 17 is a flow chart representing the procedure for determining the mode in the image forming apparatus as a third embodiment of the present invention.
Fig. 18 is a flow chart representing the procedure for determining the mode in the image forming apparatus as a third embodiment of the present invention.
Fig. 19 is a diagram schematically representing the structure of a control system as a fourth embodiment of the present invention.
Fig. 20 is a flow chart representing the procedure for determining the mode (when there is one power save mode) in the image forming apparatus as a fourth embodiment of the present invention.
Fig. 21 is a flow chart representing the procedure for determining the mode (when there is one power save mode) in the image forming apparatus as a fourth embodiment of the present invention.
Fig. 22 is a flow chart representing the procedure for determining the mode (when there are two power save modes) in the image forming apparatus as a fourth embodiment of the present invention.
Fig. 23 is a flow chart representing the procedure for determining the mode (when there are two power save modes) in the image forming apparatus as a fourth embodiment of the present invention.

### DETAILED DESCRIPTION OF THE PREFERRED EMBODIMENT

As described with reference to BACKGROUND, in the technique well known in the conventional image forming apparatus, the operation mode is shifted to the power save mode for reduced standby power, if there is no job response for a prescribed period of time. In the conventional image forming apparatus, however, the shift of the operation mode is not controlled with consideration given to the state of each computer apparatus or the state of other image forming apparatuses. This raises the following problems.

For example, when the computer apparatus of a higher sending of job frequency is placed in the log-off mode or power-off mode, the possibility of a job being sent will be lower if the user of higher priority is not logged in. However, the mode shifts to the power save mode only when the absence of job response continues for a prescribed period of time. Further, when the network is linked with a plurality of image forming apparatuses, the job can be processed in this image forming apparatus, if one of the image forming apparatuses is operating in the normal mode. However, the other image forming apparatuses shift to the power save mode only when the absence of the job response continues for a prescribed period of time, independently of the operation mode of this image forming apparatus.

As disclosed in the Unexamined Japanese Patent Application Publication No. Hei 8 (1996)-25757, in the method for managing the registered computer apparatuses, the mode will be shifted to the power save mode even if there are computer apparatuses which have been registered and which require use of a printer apparatus. This requires much time from request for printing to completion of printing.

According to one embodiment of the present invention, to ensure the shift to the power save mode conforming to a particular requirement, the image forming apparatus determines the rank of the computer apparatuses linked to the network based on the job history information and user attributes, and controls shift to the power save mode in response to the state of the computer apparatus of a prescribed rank or the statuses of other image forming apparatuses.

When the computer apparatus of a higher sending of job frequency is not operating in the normal mode or the user of higher priority is not logged in, this procedure ensures a quick shift to the power save mode, if other image forming apparatuses are operating in the normal mode. This ensures an effective reduction in the standby power consumption. Further, since there is no need of registering a computer apparatus, a reliable shift to the power save mode is ensured by a simplified operation procedure.

### [Embodiment 1]

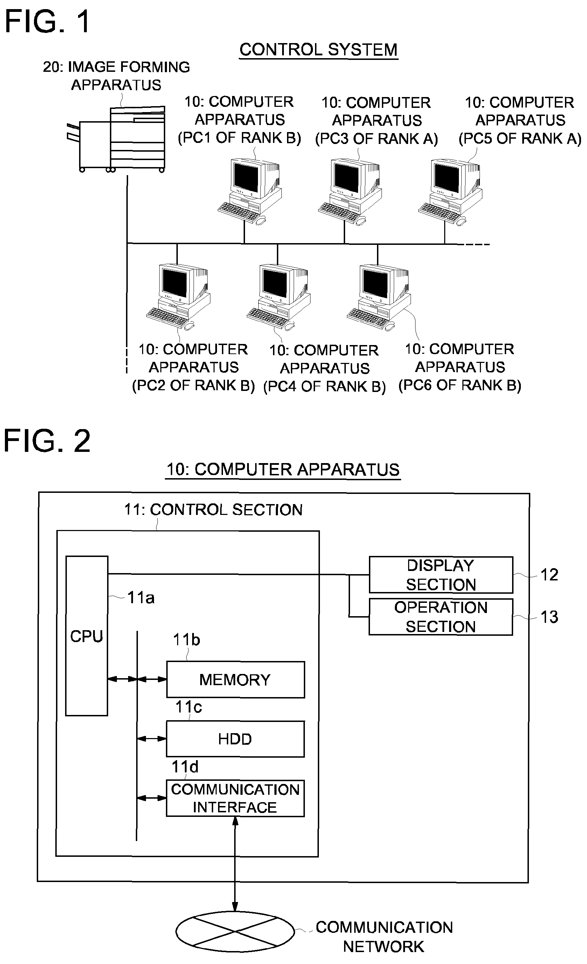

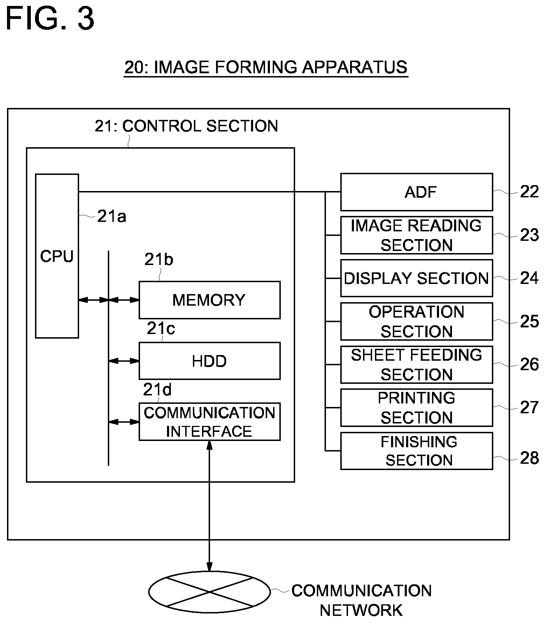

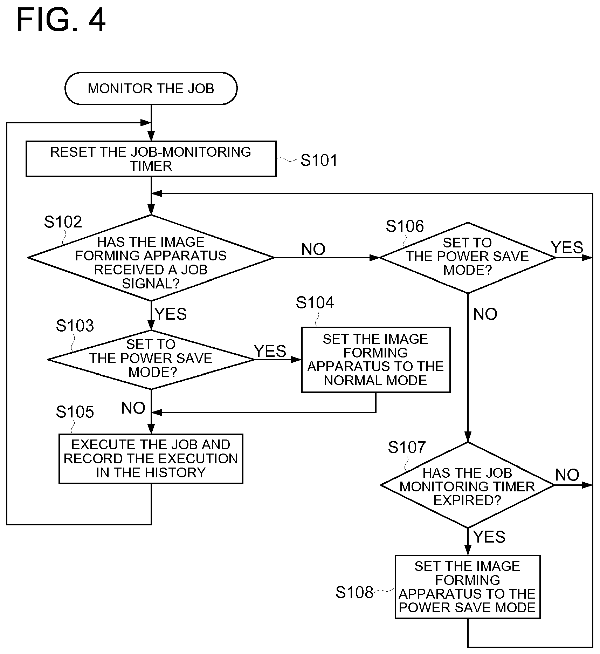

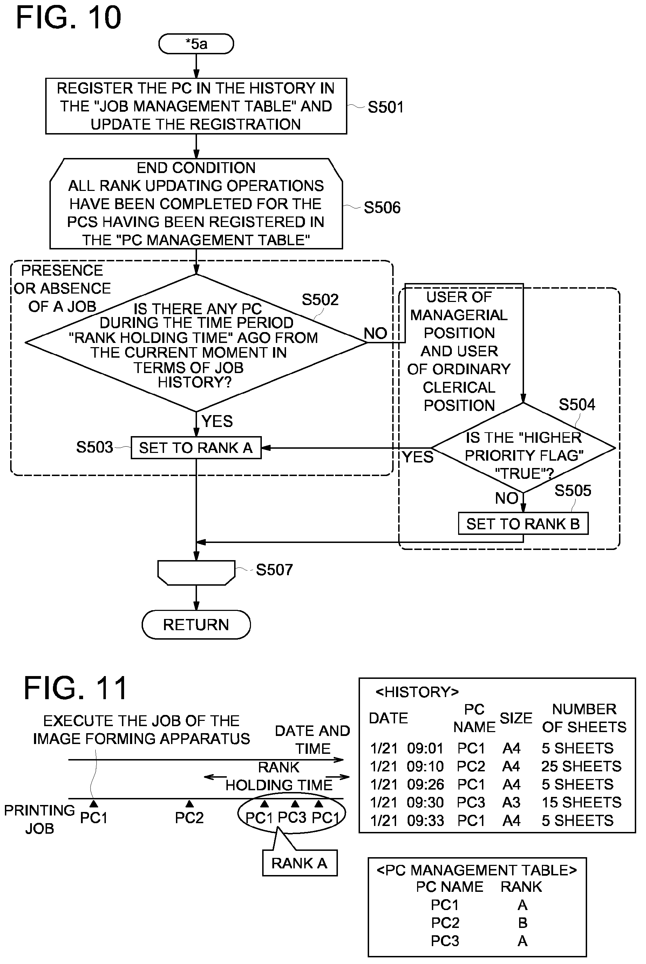

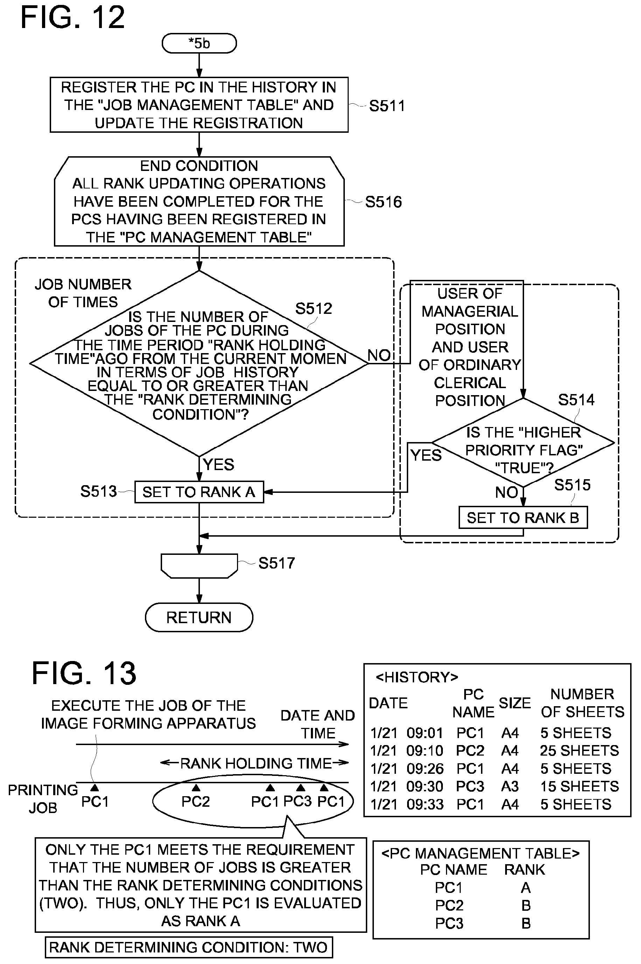

For further detailed description of the aforementioned embodiment of the present invention, the image forming apparatus as a first embodiment of the present invention will be described with reference to Figs. 1 through 13. Fig. 1 is a diagram schematically representing the structure of a control system of this embodiment. Fig. 2 is a block diagram representing the structure of the computer apparatus. Fig. 3 is a block diagram representing the structure of the image forming apparatus. Figs. 4 through 10 and 12 are flow charts representing the operations of the image forming apparatus of this embodiment. Figs. 11 and 13 are diagrams representing a specific example of determining the rank of the computer apparatuses.

As illustrated in Fig. 1, the control system of the present embodiment includes a plurality of computer apparatuses 10 for sending jobs, and an image forming apparatus 20 for forming an image upon receipt of a job. They are linked via the communication network such as LAN (Local Area Network) or WAN (Wide Area Network) specified in the Ethernet (registered trademark), Token Ring, FDDI (Fiber-Distributed Data Interface).

The following describes the details of each apparatus.

### [Computer apparatus]

A plurality of computer apparatuses 10 is classified according to rank (PCs 3 and 5 of rank A and PCs 1, 2, 4, and 6 of rank B in this case). As shown in Fig. 2, each of the image forming apparatuses 10 includes a control section 11, display section 12, and operation section 13.

The control section 11 includes a CPU (Central Processing Unit) 11a, such memory 11b as a ROM (Read Only Memory) and RAM (Random Access Memory), HDD (Hard Disk Drive) 11c, and communication interface section 11d, which are linked through a bus. The CPU 11a controls various components. The memory 11b temporarily stores various forms of data read from the, HDD 11c and communication interface section 11d. The stored data is processed by the CPU 11a, is sent to the HDD 11c and communication interface section 11 d, as required. The HDD 11c stores the programs used by the CPU 11a to control various components, information on the function of processing its own apparatus, and jobs. The information is read by the CPU 11a as required and is executed on the memory 11b. The communication interface section 11d establishes connection with the equipment connected via the communication network, and sends and receives data.

The control section 11 serves as a printer driver to drive application for creating documents or to instruct printing of the documents. The document data created by application is converted by the printer driver into the language (such as PDL (Page Description Language), PCL (Printer Command Language) and PS (Post Script)) that can be read by the image forming apparatus 20, and is sent to the image forming apparatus 20 through the communication interface section lid.

The display section 12 includes a liquid crystal display apparatus and an organic EL (electroluminescence) display apparatus, and displays the print setting screen and others.

The operation section 13 is used to operate the information displayed on the display section 12, and to input information, and is composed of a pointing device, keyboard, trackball, trackpad, tablet, and stylus pen.

### [Image forming apparatus]

As shown in Fig. 3, the image forming apparatus 20 includes a control section 21, ADF (Auto Document Feeder) 22, image reading section 23, display section 24, operation section 25, sheet feeding section 26, printing section 27, and finishing section 28.

The control section 21 controls various components and is provided with a CPU 21 a, memory 21b such as ROM and RAM, HDD 21 c, and communication interface section 21 d, which are linked via a bus. The CPU 21a controls various sections and sets or updates the modes (three modes consisting of the normal mode, power save mode with the standby power consumption reduced below that in the normal mode, and power off mode). The memory 21b temporarily stores various forms of data read from the HDD 21c, image reading section 23, and communication interface section 21d. The stored data is subjected to image processing by the CPU 21a and is transferred to the HDD 21c and printing section 27 as required. The HDD 21c stores the programs used by the CPU 21a to control various components, information on the function of processing its own apparatus, the table including the description of the state and rank of the computer apparatus 10 (hereinafter referred to as "PC management table"), the rank holding time for determining the rank of the computer apparatus 10 (hereinafter referred to as "rank determining condition"), and job history information. Such information is read by the CPU 21 a as required and is executed on the memory 21b. The communication interface section 21d establishes connection with the equipment connected via the communication network, and sends and receives data.

The control section 21 also serves as an image processing section for rasterizing the data on each page of the document specified by the job and provides image processing and screening as required, and creating the bit map data that can be printed by the printing section 27.

Further, the control section 21 also serves as a detecting section for detecting the state of the computer apparatus 10, a power supply control section for determining the mode of its own apparatus (determining shift to the power save mode) based on the result of detection, a rank determining section for determining the rank of the computer apparatus 10 based on the job reception history information from each computer apparatus 10, and user attributes (e.g., managerial position or ordinary clerical position), and a monitoring device for checking if there is any response from each computer apparatus 10 or if a job has been received within a prescribed time period. The aforementioned detecting section, power supply control section, rank determining section, monitoring device may be provided in the from of hardware. A control program can be configured to allow the computer to serve as the aforementioned detecting section, power supply control section, rank determining section, and monitoring device. This control program can be configured to run on the control section 21.

The ADF 22 automatically feeds one or two or more document sheets to the image reading section 23.

The image reading section 23 optically reads the image data from the document sheet on the document platen, and includes a light source for scanning the document, an image sensor such as a CCD (Charge Coupled Devices) for converting into the electric signal the light reflected by the document, and an analog-to-digital converter for analog-to-digital conversion of the electric signal.

The display section 24 includes a liquid crystal display apparatus and organic EL display apparatus, and displays various forms of screens for operating the image forming apparatus 20. The operation section 25 includes a button, switch and others, and is used to make various settings and to give instructions. The display section 24 and operation section 25 can be designed as separate apparatuses or as an integral apparatus provided with the a pressure sensitive operation section (touch panel) 25 wherein transparent electrodes are arranged in a grid-like configuration on the display section 24. In the case of the touch panel, the XY coordinates of the power point depressed by the finger or touch pen are detected in terms of voltage values. The detected position signal is outputted to the control section 21 as the operation signal.

The sheet feeding section 26 is composed of a sheet tray for storing sheets of various sizes, and includes a section that feeds the stored sheet to the printing section 27.

The printing section 27 is made up of the components required to form an image using the electrophotographic process or electrostatic recording imaging process. The printing section 27 forms an image on the specified sheet according to the image data read from the image reading section 23 or the job received through the communication interface section 21d and feeds the sheet to the finishing section 28.

The finishing section 28 applies desired processing of finishing such as punching, stapling, and book binding to the sheet fed from the printing section 27 according to the instruction given from the control section 21, and outputs the sheet.

Figs. 1 through 3 show an example of the present embodiment, and can be modified as appropriate. For example, the image forming apparatus 20 is only required to form an image according to the job. The ADF 22, image reading section 23, or finishing 28 can be omitted. In Fig. 1, the control system is made up of the computer apparatus 10 and image forming apparatus 20. The communication network can be linked with such a control apparatus as a RIP (Raster Image Processor) controller.

The following describes the procedure of changing the normal mode (mode change according to job signal reception) in the image forming apparatus 20 of the aforementioned structure.

As shown in Fig. 4, the control section 21 (control program) resets the job-monitoring timer (timer to be set upon job completion) (S101), and determines whether or not there is any job signal reception (S102). If there is job signal reception, the control section 21 determines whether or not the current mode of the image forming apparatus 20 is the power save mode (S103). If the power save mode is the current mode, the control section 21 shifts the power save mode to the normal mode S104). After that, the control section 21 executes the job and records the execution in the history (S105).
Then the operation goes back to Step S101.

If there is no job signal reception, a step is taken to determine whether or not the current mode is the power save mode (S106). If the power save mode is the current mode, the operation goes back to Step S102. In the meantime, if the current mode is not the power save mode, a step is taken to determine whether or not the job-monitoring timer has expired (S107). If the timer has not expired, the operation goes back to Step S102. If the timer has expired, the operation goes back to Step S102 after the mode has been set to the power save mode (S108).

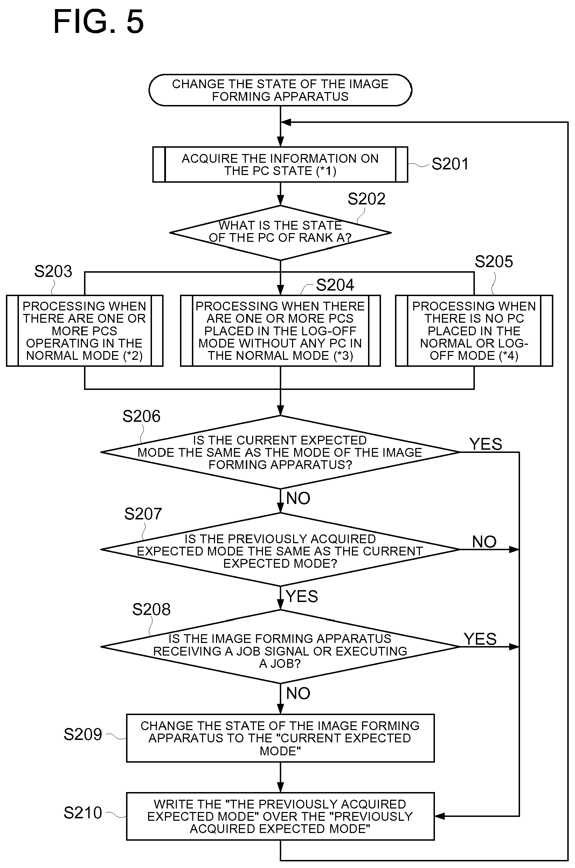

As described above, if there is no job signal reception for a prescribed time period, the mode can be shifted to the power save mode. In this control, the mode shifts to the power save mode only when a prescribed time period has elapsed. Thus, even if there is a low possibility of receiving the job signal, the normal mode is kept unchanged, and the standby power consumption cannot be effectively reduced. To solve this problem, the present embodiment provides control in such a way that the state of a prescribed computer apparatus 10 is detected and the mode is shifted to the power save mode according to the result of this detection. The following description is based on the Figs. 5 through 13.

As shown in Fig. 5, the control section 21 (control program) of the image forming apparatus 20 acquires information on the state of the computer apparatus 10 (hereinafter abbreviated as "PC") connected to the communication network (S201).

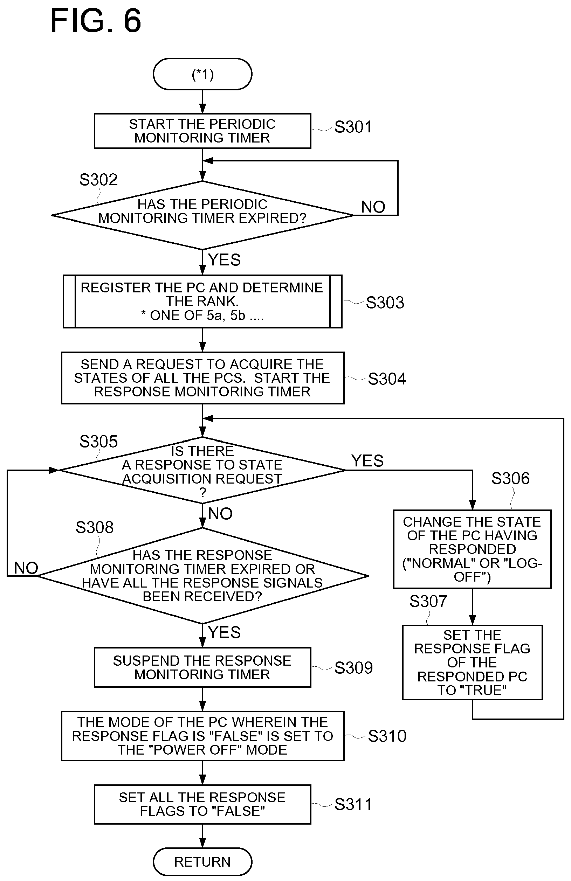

Fig. 6 shows the details of the aforementioned Step S201. The periodic monitoring timer (time used to acquire the state of the PC at prescribed time intervals) is activated (S301). When the periodic monitoring timer has expired (Yes in S302), a step is taken to register the PC and to determine the rank, as will be described later (S303). This is followed by the step of requesting acquisition of the state of all the PCs linked to the communication network. Then the response-monitoring timer (time for monitoring the response sent from the PC) is activated (S304). If there is a response to the state acquisition request (Yes in S305), the state (corresponding to the operating state since the mode is normal or log-off) of the PC having responded is changed (S306), and the response flag of the PC having response is set to "True" (S307). If there is no response to the state acquisition (No in S305), the system waits for the state acquisition response until the response-monitoring timer expires or responses have been received from all PCs (No in S308). If the response-monitoring timer has expired or responses have been received from all PCs (Yes in S308), the response-monitoring timer is suspended (S309). The apparatus having a "False" response flag has the PC mode set to the "power off" mode (indicating that the apparatus is not used) (S310). After that, all the response flags are set to "False" (S311).

Going back to Fig. 5, the control section 21 (control program) provides the processing in conformity to the state of the PC. If a plurality of PCs is handled on equal terms as in the conventional method, effective shift to the power save mode cannot be achieved. Thus, a step is taken to determine the state of a prescribed PC (PC of rank A in the present embodiment) out of a plurality of PCs connected to the communication network (S202). Then processing from S203 through S205 is performed in response to the state of this PC.

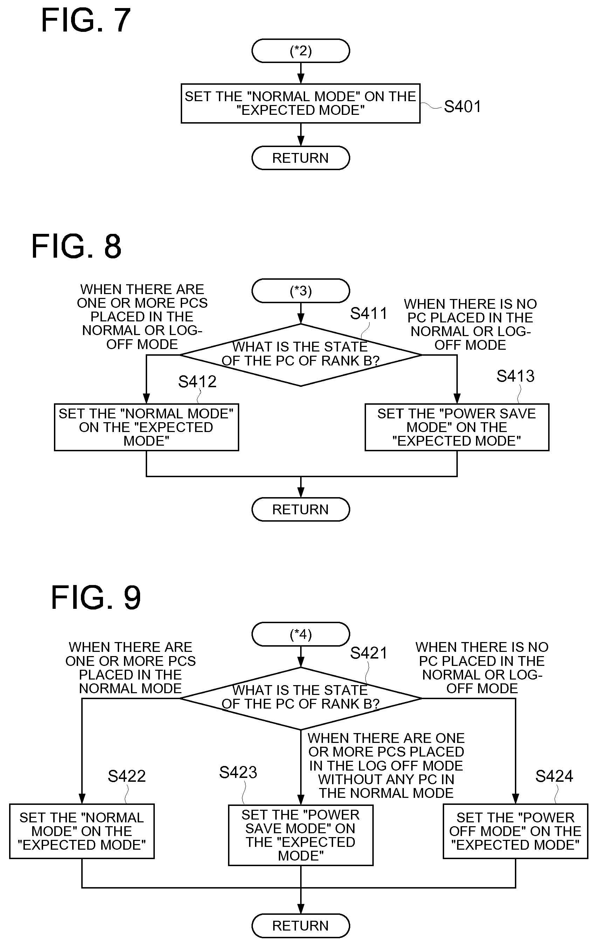

Fig. 7 shows the details of the processing (S203) when there are one or more PCs placed in the normal mode among the PCs of rank A. In this case, since there is a PC having a higher possibility of sending job signals, the "normal mode" is set on the "expected mode" in the image forming apparatus 20 (S401).

Fig. 8 shows the details of the processing (S204) wherein there is no PC placed in the normal mode among the PCs of rank A, and there is one or more PCs placed in the log-off mode. In this case, since there is no PC operating in the normal mode, the image forming apparatus 20 can be set to the "power save mode". When other PCs are operating in the normal mode, there is somewhat higher possibility of the job signal being sent. Thus, the mode is set with consideration given to the state of other PCs (PCs of rank B in this case). To put it more specifically, a step is taken to determine the state of the PC of rank B (S411). If there are one or more PCs placed in the normal mode or log-off mode among the PCs of rank B, the "normal mode" is set on the "expected mode" in the image forming apparatus 20 (S412). If there is no PC placed in the normal mode or log-off mode among the PCs of rank B, the "power save mode" is set on "expected mode" in the image forming apparatus 20 (S413).

Fig. 9 shows the details of processing (S205) wherein there is no PC placed in the normal mode or log-off mode among the PCs of rank A. In this case, since there is no PC operating in the normal mode, the image forming apparatus 20 can be set to the "power save mode". If other PCs are working in the normal mode, there will be a higher possibility of the job signal to be sent. Further, when other PCs are placed in the power offmode, there will be a lower possibility of the job signal to be sent. Thus, the mode is set with consideration given to other PCs (PCs of rank B). To put it more specifically, a step is taken to determine the state of the PCs of rank B (S421). If there are one or more PCs operating in the normal mode among the PCs of rank B, the "normal mode" is set on the "expected mode" in the image forming apparatus 20 (S422). If there is no PC operating in the normal mode among the PCs of rank B and there is one or more PCs placed in the log-off mode, "power save mode" is set on the "expected mode" in the image forming apparatus 20 (S423). If there is no PC placed in the normal mode or log-off mode among the PCs of rank B, the "power off" is set on the "expected mode" in the image forming apparatus 20 (S424).

Going back to Fig. 5, the control section 21 (control program) determines whether or not the "current expected mode" is the same as the current mode of the image forming apparatus 20 (S206). If it is the same, the operation goes to Step S210 because the mode of the image forming apparatus 20 need not be changed.

If the "current expected mode" is not the same as the current mode of the image forming apparatus, the control section determines whether or not the "previously acquired expected mode" is the same as the "current expected mode" (S207). If it is not the same, the operation skips to Step S210. Comparison between the "previously acquired expected mode" and "current expected mode" is made for the following reason: There may be a sudden change in the state of the computer apparatus 10 (e.g., turning off of the power or incorrect log-off operation). In this case, it is not preferred to change the mode of the image forming apparatus 20 according to the state of the computer apparatus 10. Thus, this comparison is made to ensure that the mode can be changed when the "expected mode" becomes the same two consecutive times.

If the "previously acquired expected mode" is the same as the "current expected mode", a step is taken to determine whether or not the image forming apparatus is receiving the job signal or executing the job (S208). If the image forming apparatus is receiving the job signal or executing the job, the operation skips to Step S210 because the mode of the image forming apparatus 20 need not be changed.

If the image forming apparatus is not receiving the job signal or executing the job, the mode of the image forming apparatus 20 is changed to the "current expected mode" (S209). After that, "current expected mode" is written over the "previously acquired expected mode" (S210), and the operation goes back to Step S201. The same procedure is repeated.

If the image forming apparatus 20 is set to the normal mode and the "current expected mode" is the power save mode upon completion of the aforementioned procedure, the mode can be shifted immediately to the power save mode.

The following describes the PC registration and rank determination procedure in S303 of Fig. 6: The rank of this computer apparatus 10 is determined in conformity to the job history and user attributes. The job history will include the information on presence or absence of a job and the number of sending of job. The following describes them separately.

### [Presence or absence of a job and user attribute referencing procedure]

As shown in Fig. 10, the control section 21 (control program) of the image forming apparatus 20 references the job history stored in the memory 21 b and HDD 21c and registers or updates the PC of the job history in the PC management table (S501).

The control section 21 (control program) determines whether or not there is any PC that has sent a job signal during the time period from the current moment to the "rank holding time" in terms of job history (S502). If there is any, the rank of this PC is set to "A" (S503). If there is no such PC, a step is taken to determine whether or not the "priority flag" is "True" (S504). If it is "True", the rank of this PC is set to "A" (S503). If it is not "True", the rank of this PC is set to "B" (S505). The procedures of Steps S502 through S505 are repeated for all of the computer apparatuses registered in the PC management table until ranks are completely updated (Start loop edge S506 and end loop edge S507). The "priority flag" is the information showing whether or not a PC is frequently used (e.g., by a user of managerial position). "True" indicates frequent use of a PC, while "False" denotes less frequent use.

This processing will be described specifically with reference to Fig. 11. Assume that the communication network is connected with the PC1 through PC3, and the job on the upper right corner of the drawing is being executed. Since the PC1 and PC3 are present on the network from the current moment to the "rank holding time", the PC1 and PC3 are set to rank A, and the PC2 to rank B, as given in the Table on the lower right corner of the drawing.

### [Number of sending of job and user attribute referencing procedure]

As shown in Fig. 12, the control section 21 (control program) of the image forming apparatus 20 references the job history stored in the memory 21 b and HDD 21c, and registers and updates the PCs of the job history in the PC management table (S511).

Then the control section 21 (control program) determines whether or not the number of job sending of of the PC during the time period from the current time to the "rank holding time" in terms of job history is equal to or greater than the "rank determining condition" (S512). If it is equal to or greater than the "rank determining condition", the rank of this PC is set to "A" (S513). If it is not equal to or greater than the "rank determining condition", a step is taken to determine whether or not the "priority flag is "True" (S514). If it is "True", the rank of this PC is set to "A" (S513). If it is not "True", the rank of this PC is set to B (S515). The procedures of Steps S512 through S515 are repeated for all of the computer apparatuses registered in the PC management table until ranks are completely updated(Start loop edge S506 and end loop edge S507)..

This procedure will be specifically described with reference to Fig. 13. Similarly to the above, assume that the communication network is linked with the PC1 through PC3, and the job shown in the history table on the upper right corner of the drawing is being executed. Also assume that the rank determining condition is set to "twice". The PC1 is set to the rank A and the PC2 and PC3 are set to rank B, as shown in the PC management table on the lower right of the drawing, because only the PC 1 sent the job signal twice or more during the period from the current time to the "rank holding time".

In Figs. 10 through 13, the rank of the computer apparatus 10 is determined in conformity to the job history and user attributes. The rank of the computer apparatus 10 can be set in conformity to any one of the job history or user attributes.

Table 1 shows the relationship between the state of the computer apparatus 10 and mode of the image forming apparatus 20 described above.

**[Table 1]**

| | | State shift of image forming apparatus | | |
|---|---|---|---|---|
| | | PC of rank A | | |
| | | Normal | Log-off | Power off (including standby and suspend) |
| PC of rank B | Normal | Normal mode | Normal mode unchanged | Normal mode unchanged |
| | Log-off | Normal mode | Normal mode unchanged | Shift to power save mode |
| | Power off (including standby and suspend) | Normal mode | Shift to power save mode | Shift to power off mode |

As described above, in the present embodiment, the rank of the computer apparatus 10 is determined in conformity to the job history information and user attributes, and decision is made to determine whether or not the image forming apparatus 20 should be shifted to the power save mode, based on the state of the computer apparatus of the prescribed rank (rank A) which is more likely to send job signals. Thus, the standby power consumption can be reduced more effectively, as compared to the conventional control method for shifting to the power save mode when there is no reception of job signals for a prescribed time period job.

### [Embodiment 2]

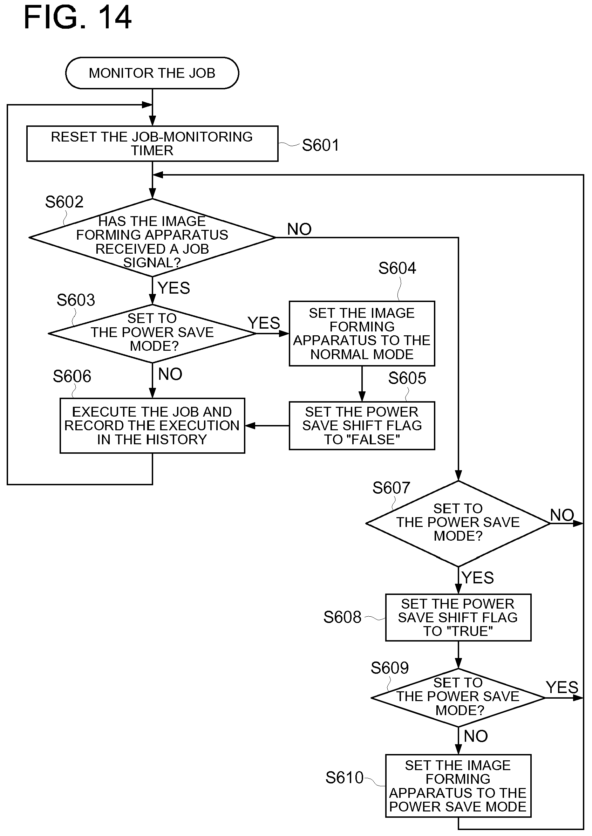

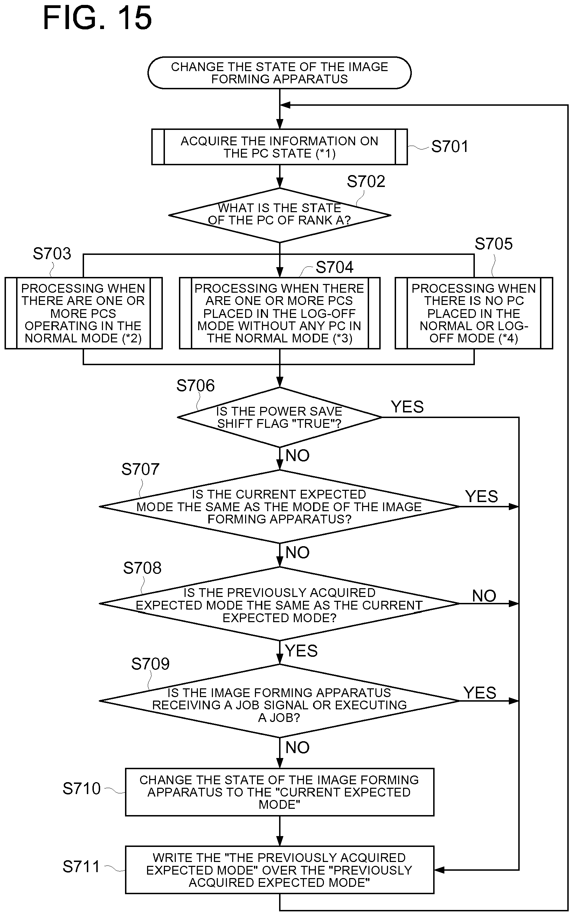

Referring to Figs. 14 and 15, the following describes the image forming apparatus as a second embodiment of the present invention. Figs. 14 and 15 are flow charts showing the operations of the image forming apparatus of the present embodiment.

In the first embodiment, when the "current expected mode" is the normal mode, and the current mode of the image forming apparatus 20 is the power save mode or power off mode, the mode is always recovered to the normal mode. When the image forming apparatus 20 has shifted to the power save mode due to absence of job signal reception for a prescribed time period job, it is not preferred to set the mode back to the normal mode in conformity to the state of the computer apparatus 10. Thus, in the present embodiment, the mode change is controlled with consideration given to the reason why the image forming apparatus has shifted to the power save mode.

The following description with reference to Figs. 14 and 15 also assumes that the image forming apparatus can be set to one of the three modes; a normal mode, power save mode, and power off mode.

The following first describes the procedure of changing the normal mode (to be changed in conformity to job signal reception).

As shown in Fig. 14, the control section 21 (control program) resets the job monitoring timer (S601), and determines if a job signal has been received or not (S602). If a job signal has been received, a step is taken to determine whether or not the current mode is the power save mode (S603). If it is the power save mode, this mode is changed to the normal mode (S604), and the power save transfer flag is changed to "False" (S605). After that, the job is executed and the execution record is recorded in the history (S606). The operation then goes back to Step S601. The power save transfer flag is a flag to determine whether or not the mode has been changed to the power save mode because the image forming apparatus 20 has not received any job signal for a prescribed period of time. The "True" indicates that the mode has been shifted, while the "False" denotes that the mode has not been shifted.

If there is no reception of a job signal, a step is taken to determine whether or not the job-monitoring timer has expired (S607). If it has not expired, the operation goes back to Step S602. If it has expired, the power save transfer flag is changed to "True" (S608), and a step is taken to determine whether or not the current mode is the power save mode (S609). If the current mode is the power save mode, the operation goes back to Step S602. If it is not the power save mode, the operation goes back to Step S602 after the mode has been set to the power save mode (S610).

Referring to the power save transfer flag set in the aforementioned flow, the following describes the procedure of controlling the mode shift.

As shown in Fig. 15, the control section 21 (control program) of the image forming apparatus 20 acquires the information on the state of the PC linked with the communication network (S701). The details of these steps will not be described since the steps are the same as those of the first embodiment already described (Fig. 6).

Then the control section 21 (control program) determines the state of the PC of rank A (S702). If there are one or more PCs placed operating in the normal mode among the PCs of the rank A, the control section 21 performs processing as shown in S703. If there is no PC operating in the normal mode but there is one or more PCs placed in the log-off mode among the PCs of the rank A, the control section 21 performs processing as shown in S704. If there is no PC operating in the normal mode or placed in the log-off mode among the PCs of the rank A, the control section 21 performs processing as shown in S705. The details of the processing in S703 through S705 will not be described since the steps are the same as those of the first embodiment already described (Figs. 7 through 9).

The control section 21 (control program) determines whether or not the "power save transfer flag" is "True" (S706). If it is "True", the operation skips to Step S711 to prevent the mode from shifting to the normal mode because the image forming apparatus 20 has shifted to the power save mode because job signals were not received for a prescribed period of time.

If the "power save transfer flag" is not "True", a step is taken to determine whether or not the "current expected mode" is the same as the current mode of the image forming apparatus 20 (S707). If it is the same as the current mode, the operation skips to Step S711 since there is no need of changing the mode of the image forming apparatus 20.

If the "current expected mode" is different from the current mode of the image forming apparatus, a step is taken to determine whether or not the "previously acquired expected mode" is the same as the "current expected mode" (S708). If it is different from the "current expected mode", the operation skips to Step S711 because there may have been a sudden change in the state of the computer apparatus 10.

If the "previously acquired expected mode" is the same as the "current expected mode", a step is taken to determine that the image forming apparatus is receiving a job signal or executing a job (S709). The operation skips to Step S711 because the mode of the image forming apparatus 20 should not be changed when the image forming apparatus is receiving a job signal or executing a job.

If the image forming apparatus is not receiving a job signal or executing a job, the state of the image forming apparatus 20 is shifted to the "current expected mode" (S710). In this case, the "previously acquired expected mode" is written over the "current expected mode" after that (S711), and the operation goes back to Step S701. Then this procedure is repeated.

As is shown in the Fig. the present embodiment ensures more effective reduction in the standby power consumption since resetting to the normal mode is restricted when the mode has shifted to the power save mode because the image forming apparatus did not receive job signals for a prescribed period of time

### [Embodiment 3]

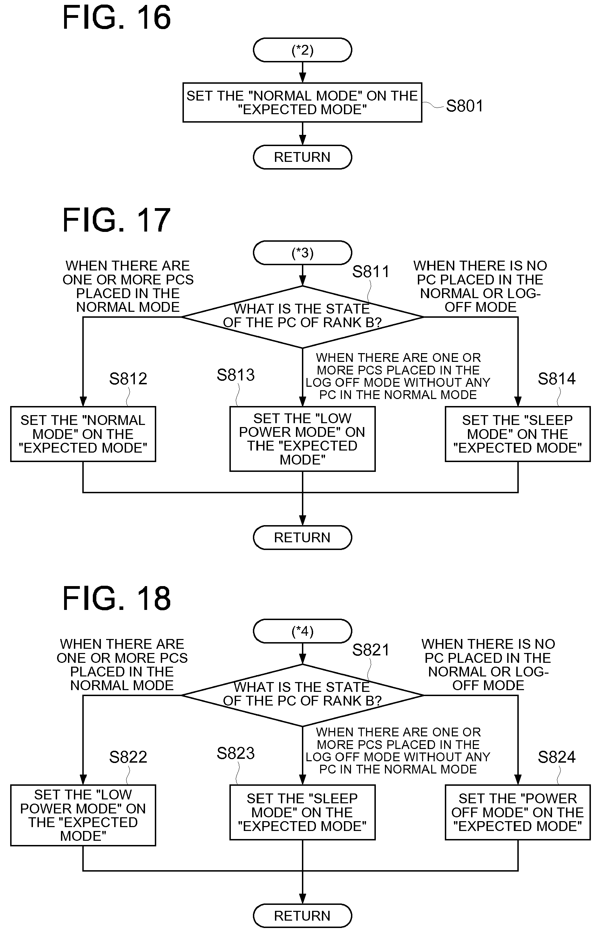

Referring to Figs. 16 through 18, the following describes the image forming apparatus as a third embodiment of the present invention. Figs. 16 through 18 are flow charts showing the operation of the image forming apparatus of the present embodiment

The description of the aforementioned first and second embodiment assumes that the image forming apparatus can be set to one of the three modes -- a normal mode, power save mode, and power off mode. However, when the image forming apparatus is set to the power save mode, it may be set to any one of the further two modes -- a low power mode (e.g., a display section power off mode) and a sleep mode (printing section power off mode plus low power mode) in some cases. The following describes the control wherein a plurality of power save modes can be used in the present embodiment.

The basic operations of the image forming apparatus of the present embodiment are the same as those of Fig. 5 in the first embodiment and those of the Fig. 15 of the second embodiment The difference lies in the processing to be performed in conformity to the state of the PC of rank A (S203 through S205 of Fig. 5, and S703 through 705 of Fig. 15). The following describes these processes.

Fig. 16 shows the details of the processing (S203, S703) when there are one or more PCs operating in the normal mode among the PCs of rank A. The "normal mode" is set on the "expected mode" (S801).

Fig. 17 shows the details of the processing (S204, S704) when there is one or more PCs placed in the log-off mode among the PCs of rank A without any PC operating in the normal mode. A step is taken to determine the state of the PC of rank B (S811). If there are one or more PCs placed in the normal mode among the PCs of rank B, the "normal mode" is set on the "expected mode" (S812). If there are one or more PCs placed in the log-off mode among the PCs of rank B without any PC in the normal mode, "low power mode" is set on the "expected mode" (S812). If there is no PC placed in the normal mode or log-off mode among the PCs of rank B, "sleep mode" is set on the "expected mode" (S813).

Fig. 18 shows the details of processing (S205, S705) where there is no PC placed in the normal mode or the log-off mode among the PCs of rank A. A step is taken to determine the state of the PC of rank B (S821). If there are one or more PCs placed in the normal mode among the PCs of rank B, the "normal mode" is set to the "expected mode" (S822). If there are one or more PCs placed in the log-off mode among the PCs of rank B without any PC placed in the normal mode, the "low power mode" is set on the "expected mode" (S823). If there is no PC placed in the normal mode or log-off mode among the PCs of rank B, the "power off mode" is set on the "expected mode" (S824).

Table 2 shows the relationship between the state of the computer apparatus 10 and mode of the image forming apparatus 20 described above.

**[Table 2]**

| State shift of image forming apparatus (Two power save modes) | | | | |
|---|---|---|---|---|
| | | PC of rank A | | |
| | | Normal | Log-off | Power off (including standby and suspend) |
| PC of rank B | Normal | Normal mode | Normal mode unchanged | Shift to low power mode |
| | Log-off | Normal mode | Shift to low power mode | Shift to sleep mode |
| | Power off (including standby and suspend) | Normal mode | Shift to sleep mode | Shift to power off mode |

As is shown in the Fig. in the present embodiment, the mode is set to the "low power mode" or "sleep mode" in response to the state of the computer apparatus 10. This ensures a more effective reduction in the standby power consumption.

### [Embodiment 4]

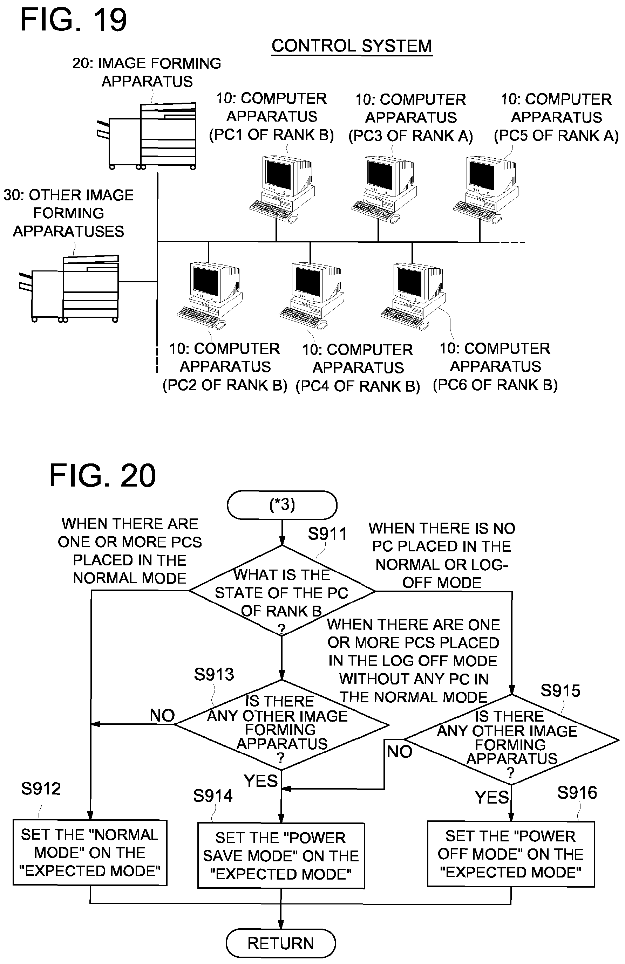

Referring to Figs. 19 through 23, the following describes the image forming apparatus as a fourth embodiment of the present invention. Fig. 19 schematically shows the structure of the control system of the present embodiment. Figs. 20 through 23 show the flow charts showing the operation of the image forming apparatus of the present embodiment

In the above description of the first through third embodiments, the communication network is connected with one image forming apparatus. In some cases, however, the communication network is connected with other image forming apparatuses. Thus, with reference to the present embodiment, control of such a system will be described.

As shown in Fig. 19, the control system of the present embodiment includes a plurality of computer apparatuses 10 for sending job signals and a plurality of image forming apparatuses (image forming apparatus 20 and 1 or a plurality of other image forming apparatuses 30) for receiving job signals and forming an image. They are connected via the communication network.

The basic operations of the image forming apparatus of the present embodiment are the same as those described with reference to Fig. 5 of the first embodiment and those described with reference to Fig. 15 of the second embodiment. In S201 of Fig. 5 and S701 of Fig. 15, the control section 21 (control program) acquires information on the state of the computer apparatus 10 and other image forming apparatuses connected to the communication network. It also provides processing (S204 through S205 of Fig. 5 and S704 through 705 of Fig. 15) in response to the state of the PC of rank A. This is the difference. The following describes this processing.

### [When the image forming apparatus has three modes -- normal mode, power save mode, and power off modes]

Fig. 20 shows the details of the processing (S204) when there is one or more PCs placed in the log-off mode among the PCs of rank A without any PC operating in the normal mode. A step is taken to determine the state of the PCs of rank B (S911).

When there is one or more PCs operating in the normal mode among the PCs of rank B, the "normal mode" is set on the "expected mode" (S912).

When there is one or more PCs placed in the log-off mode among the PCs of rank B without any PC operating in the normal mode, a step is taken to determine whether or not there is another image forming apparatus on the communication network (S913). If there is no other image forming apparatus, the "normal mode" is set on the "expected mode" (S912). If there is any other image forming apparatus, the "power save mode" is set on the "expected mode" (S914).

When there is no PC placed in the normal mode or log-off mode among the PCs of rank B, a step is taken to determine whether or not there is any other image forming apparatus on the communication network (S915). If there is no other image forming apparatus, the "power save mode" is set on the "expected mode" (S914). If there is any other image forming apparatus, the "power off" is set on the "expected mode" (S916).

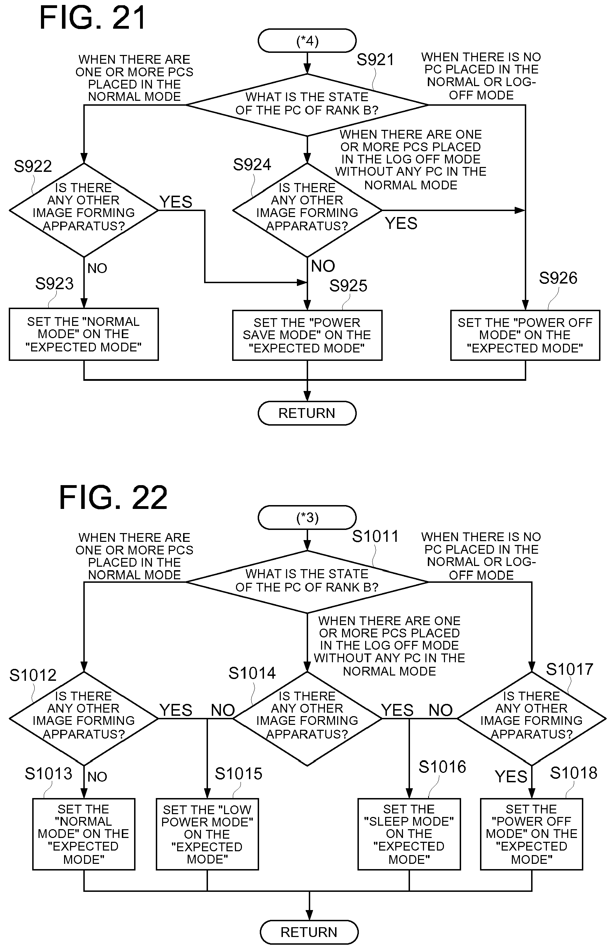

Fig. 21 shows the details of processing (S205) when there is no PC placed in the normal mode or log-off mode among the PCs of rank A. The state of the PC of rank B is first determined (S921).

If there are one or more PCs operating in the normal mode among the PCs of rank B, a step is taken to determine whether or not there is any other image forming apparatus on the communication network (S922). If there is no other image forming apparatus, the "normal mode" is set on the "expected mode" (S923). If there is any other image forming apparatus, the "power save mode" is set on the "expected mode" (S925).

If there are one or more PCs placed in the log-off mode among the PCs of rank B without any PC operating in the normal mode, a step is taken to determine whether or not there is any other image forming apparatus on the communication network (S924). If there is no other image forming apparatus, the "power save mode" is set on the "expected mode" (S925). If there is any other image forming apparatus, the "power off' is set on the "expected mode" (S926).

If there is no PC placed in the normal mode or log-off mode among the PCs of rank B, the "power off' is set on the "expected mode" (S926).

Table 3 shows the result of applying the aforementioned control to Table 1.

**[Table 3]**

| State shift of image forming apparatus (power save mode 1) | | | | |
|---|---|---|---|---|
| | | PC of rank A | | |
| | | Normal | Log-off | Power off (including standby and suspend) |
| | Normal | Normal mode | Normal mode unchanged | If there is no other image forming apparatus, the normal mode is kept unchanged. |
| | | | | If there is any other image forming apparatus, the mode is shifted to the power save mode. |
| PC of rank B | Log-off | Normal mode | If there is no other image forming apparatus, the normal mode is kept unchanged. | If there is no other image forming apparatus, the mode is shifted to the power save mode. |
| | | | If there is any other image forming apparatus, the mode is shifted to the power save mode. | If there is any other image forming apparatus, the mode is shifted to the power off mode. |
| | Power off (including standby and suspend) | Normal mode | If there is no other image forming apparatus, the mode is shifted to the power save mode. | The mode is shifted to the power off mode, independently of the presence or absence of other image forming apparatuses. |
| | | | If there is any other image forming apparatus, the mode is shifted to the power off mode. | |

### [When the image forming apparatus has four modes -- normal mode, low power mode, sleep mode, and power off modes]

Fig. 22 shows the details of the processing (S704) when there is one or more PCs placed in the log-off mode among the PCs of rank A without any PC operating in the normal mode. A step is first taken to determine the state of the PCs of rank B (S1011).

If there are one or more PCs operating in the normal mode among the PCs of rank B, a step is taken to determine whether or not there is any other image forming apparatus on the communication network (S1012). If there is no other image forming apparatus, the "normal mode" is set on the "expected mode" (S1013). If there is any other image forming apparatus, the "low power mode" is set on the "expected mode" (S1015).

If there are one or more PCs placed in the log-off mode among the PCs of rank B without a PC placed in the normal mode, a step is taken to determine whether or not there is any other image forming apparatus on the communication network (S1014). If there is no other image forming apparatus, the "low power mode" is set on the "expected mode" (S1015). If there is any other image forming apparatus, the "sleep mode" is set on the "expected mode" (S1016).

If there is no PC placed in the normal or log-off mode among the PCs of rank B normal mode or log-off mode, a step is taken to determine whether or not there is any other image forming apparatus on the communication network (S1017). If there is no other image forming apparatus, the "sleep mode" is set to the "expected mode" (S1016). If there is any other image forming apparatus, the "power off" is set on the "expected mode" (S1018).

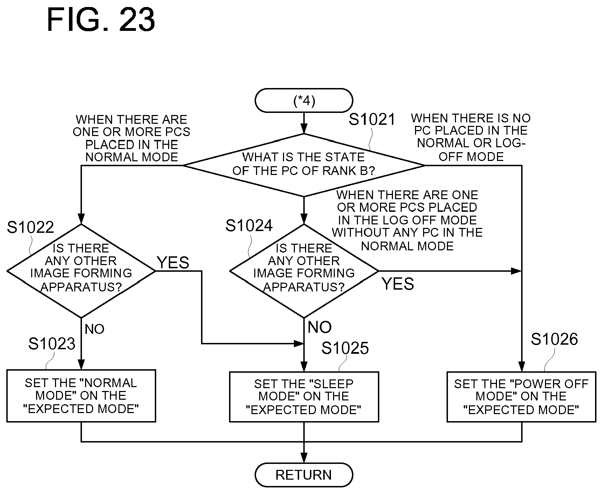

Fig. 23 shows the details of the processing (S705) when there is no PC placed in the normal or log-off mode among the PCs of rank A. The state of the PCs of rank B is first determined (S1021).

If there are one or more PCs operating in the normal mode among the PCs of rank B, a step is taken to determine whether or not there is any other image forming apparatus on the communication network (S1022). If there is no other image forming apparatus, the "low power mode" is set on the "expected mode" (S1023). If there is any other image forming apparatus, the "sleep mode" is set on the "expected mode" (S1025).

If there are one or more PCs placed in the log-off mode among the PCs of rank B without any PC in the normal mode, a step is taken to determine whether or not there is any other image forming apparatus on the communication network (S1024). If there is no other image forming apparatus, the "sleep mode" is set on the "expected mode" (S1025). If there is any other image forming apparatus, the "power off" is set on the "expected mode" (S1026).

If there is no PC placed in the normal or log-off mode among the PCs of rank B, the "power off" is set on the "expected mode" (S1026).

Table 4 shows the result of applying the aforementioned control to Table 2.

**[Table 4]**

| State shift of image forming apparatus (power save mode 2) | | | | |
|---|---|---|---|---|
| | | PC of rank A | | |
| | | Normal | Log-off | Power off (including standby and suspend) |
| | Normal | Normal mode | If there is no other image forming apparatus, the normal mode is kept unchanged. | If there is no other image forming apparatus, the mode is shifted to the low power mode. |
| | | | If there is any other image forming apparatus, the mode is shifted to the low power mode. | If there is any other image forming apparatus, the mode is shifted to the sleep mode. |
| PC of rank B | Log-off | Normal mode | If there is no other image forming apparatus, the mode is shifted to the low power mode. | If there is no other image forming apparatus, the mode is shifted to the sleep mode. |
| | | | If there is any other image forming apparatus, the mode is shifted to the sleep mode. | If there is any other image forming apparatus, the mode is shifted to the power off mode. |
| | Power off (including standby and suspend) | Normal mode | If there is no other image forming apparatus, the mode is shifted to the sleep mode. | The mode is shifted to the power off mode, independently of the presence or absence of other image forming apparatuses. |
| | | | If there is any other image forming apparatus, the mode is shifted to the power off mode. | |

As described above, in the present embodiment, the mode is shifted to the power save mode in response to the presence or absence of any other image forming apparatus 30 linked to the network. This arrangement ensures a more effective reduction in the standby power consumption.

It is to be expressly understood that the present invention is not restricted to the aforementioned embodiments. The configuration and control of the present invention can be embodied in a great number of variations with appropriate modification or additions, without departing from the technological spirit and scope of the invention claimed. For example, in the aforementioned embodiments, the computer apparatuses 10 are classified as rank A and rank B. However, the same description applies when they are classified into three or more ranks. Further, in the third embodiment, the power save mode is classified as a low power mode and sleep mode. The same description applies when the power save mode is classified into three or more types.

According to the image forming apparatus of the present embodiment, an effective reduction in the standby power consumption can be achieved and the power save mode conforming to a particular state can be selected.

This is because the rank of the computer apparatus linked to the network is determined based on job history information and user attributes, and a control step is taken to determine whether or not the mode should be shifted to the power save mode, based on the state of the computer apparatus of each rank and the states of other image forming apparatuses.

## Claims

1. An image forming apparatus connected to a plurality of computer apparatuses via a network comprising;
a detecting section configured to detect a state of at least two computer apparatuses out of said plurality of the computer apparatuses; and
a power supply control section configured to control a power mode of said image forming apparatus based on said state of said two computer apparatuses detected by said detecting section;
**characterized in that**
said state of said two computer apparatuses is either "normal", "log-off" or "power off";
said two computer apparatuses have been assigned different ranks with regards to an influence of said state on said control of said power mode of said image forming apparatus;
and that the influence of a computer with a higher rank on said control of said power mode of said image forming apparatus is higher than said influence of a computer with a lower rank.

2. The image forming apparatus of claim 1,
wherein said power mode of said image forming apparatus comprises at least one normal mode with no power saving, a first power save mode, and a second power save mode further reducing a power consumption below a power consumption In said first power save mode;
**characterized in that**
said power supply control section determines whether to shift said normal power mode to said first power save mode or to said second power save mode, based only on the state of said computer with a higher rank computer if said computer with a higher rank is in state "normal".

3. The image forming apparatus of claim 2, further comprising;
a display section; and a printing section,
**characterized in that**
said first power save mode is a mode which turns off power supply on said display section and,
said second power save mode is a mode which turns off power supply on said printing section in addition to said power supply on said display section.

4. The image forming apparatus of claim 1,
**characterized in that**
said the power supply control section determines whether to shift said normal power mode to said first power save mode or to the said second power save mode, based on the state of said computer with a higher rank computer and the state of said computer with a lower rank if said computer with a higher rank is in state "log-off" or "power off".

5. The image forming apparatus of any of claim 1 to 4, further comprising;
a rank determining section configured to determine said rank of said at least two computer apparatuses based on a job history information of each of said computer apparatuses.

6. The image forming apparatus of claim 5,
**characterized in that** said rank determining section is configured to determine said rank of said at least two computer apparatuses based on whether each computer apparatus has sent a job or not until a prescribed time before a current moment.

7. The image forming apparatus of claim 5,
**characterized in that** said rank determining section is configured to determine said rank of said at least two computer apparatuses based on a number of send print jobs of each computer apparatus during a prescribed time.

8. The image forming apparatus of claim 5,
**characterized in that** said rank determining section is configured to determine said rank of said at least two computer apparatuses based on a number of send print jobs during a prescribed time before a current moment.

9. The image forming apparatus of claim 5,
**characterized in that** said rank determining section is configured to determine said rank of said at least two computer apparatuses based on a job history information for each of said at least two computer apparatuses, and an user attribute for each of said at least two computer apparatus.

10. The image forming apparatus of claim 1,
wherein in case there is at least one other image forming apparatus connected to the network said detection section is further configured to detect the state of said at least one other image forming apparatus
**characterized in that**;
said power supply control section is further configured to control said power mode of said image forming apparatus, based on a combination of said state of said at least two computer apparatuses and a state of said other image forming apparatus.

## Patentansprüche

1. Ein Bilderzeugungsgerät, das über ein Netzwerk mit einer Vielzahl von Computergeräten verbunden ist;
ein Erfassungsteil, das konfiguriert ist, um einen Zustand von wenigstens zwei Computergeräten aus der Vielzahl von Computergeräten zu erkennen; und
ein Steuerteil für die Stromversorgung, das so konfiguriert ist, dass einen Energiemodus des genannten Bilderzeugungsgeräts auf Grundlage des durch das besagte Erfassungsteil erfassten Zustands der genannten zwei Computer gesteuert wird;
**dadurch gekennzeichnet, dass**
der Zustand der besagten zwei Computergeräte "normal", "Abmelden" oder "Ausschalten" ist;
besagte zwei Computergeräte wurden verschiedenen Reihen zur Beeinflussung des Zustands der Steuerung des Strommodus des Bilderzeugungsgeräts zugeordnet;
und dass der Einfluss eines Computers mit höherem Rang auf die besagte Steuerung des besagten Energiemodus des besagten Bilderzeugungsgeräts höher als der besagte Einfluss eines Computers mit einem niedrigeren Rang ist.

2. Das Bilderzeugungsgerät von Anspruch 1,
wobei der Energiemodus des Bilderzeugungsgeräts
mindestens einen normalen Modus ohne Energieeinsparung umfasst sowie einen ersten Energiesparmodus und einem zweiten Energiesparmodus, der einen Stromverbrauch auf unterhalb einer Energieaufnahme des besagten ersten Energiesparmodus reduziert;
**dadurch gekennzeichnet, dass**
das besagte Teil der Stromversorgungssteuerung bestimmt, ob der besagte Normalstrommodus in den besagten ersten Energiesparmodus oder den besagten zweiten Energiesparmodus verschoben wird, basierend nur auf dem Zustand des Computers mit einem höheren Rang, wenn sich der Computer mit einem höheren Rang im Zustand "normal" befindet,

3. Das Bilderzeugungsgerät nach Anspruch 2, umfasst zudem:
ein Anzeigeteil und ein Druckteil ,
**dadurch gekennzeichnet, dass**
der erste Energiesparmodus ein Modus ist, der die Stromversorgung an dem besagten Anzeigeteil ausschaltet und
der besagte zweite Energiesparmodus ein Modus ist, der die Stromversorgung an dem Druckteil zusätzlich zur Stromversorgung auf dem besagten Anzeigeteil ausschaltet.

4. Das Bilderzeugungsgerät nach Anspruch 1,
**dadurch gekennzeichnet, dass**
das besagte Steuerteil der Stromversorgung bestimmt, ob der besagte Normalstrommodus zu dem besagten ersten Energiesparmodus oder dem besagten zweiten Energiesparmodus zu verschieben ist, basierend auf dem Zustand des besagten Computers mit einem Computer höheren Rangs und dem Zustand des besagten Computers mit einem niedrigeren Rang, wenn der Computer mit einem höheren Rang sich im Zustand "Abmelden" oder "Ausschalten" befindet.

5. Die Bilderzeugungsgerät nach einem der Ansprüche 1 bis 4, umfasst außerdem:
ein Rangbestimmungsteil, das zum Bestimmen des Rangs von mindestens zwei Computergeräten basierend auf einer Auftragshistorieinformation von jedem der besagten Computergeräte konfiguriert ist.

6. Das Bilderzeugungsgerät nach Anspruch 5,
**dadurch gekennzeichnet, dass**
das Rangbestimmungsteil so konfiguriert ist, dass der besagte Rang von mindestens zwei Computergeräten basierend darauf bestimmt wird, dass jedes Computergerät einen Auftrag bis zu einer vorgeschriebenen Zeit vor einem aktuellen Zeitpunkt gesendet hat oder nicht.

7. Das Bilderzeugungsgerät nach Anspruch 5,
**dadurch gekennzeichnet, dass**
das Rangbestimmungsteil so konfiguriert ist, dass der besagte Rang der besagten mindestens zwei Computergeräte basierend auf einer Anzahl von Drucksendeaufträgen von jedem Computergerät während einer vorgegebenen Zeit bestimmt wird,

8. Das Bilderzeugungsgerät nach Anspruch 5,
**dadurch gekennzeichnet, dass**
das Rangbestimmungsteil so konfiguriert ist, dass der besagte Rang von den besagten mindestens zwei Computergeräten basierend auf einer Anzahl von Drucksendeaufträgen während einer vorgeschriebenen Zeit vor einem aktuellen Moment bestimmt wird.

9. Das Bilderzeugungsgerät nach Anspruch 5,
**dadurch gekennzeichnet, dass**
das Rangbestimmungsteil so konfiguriert ist, dass der besagte Rang der mindestens zwei Computergeräte basierend auf einer Auftragshistorieinformation für jedes der mindestens zwei Computergeräte und einem Benutzerattribut für jede der mindestens zwei Computergeräte bestimmt wird,

10. Das Bilderzeugungsgerät nach Anspruch 1,
wobei im Falle, dass es mindestens ein weiteres Bilderzeugungsgerät gibt,
das mit dem Netzwerk des besagten Erfassungsteils verbunden ist, weiterhin konfiguriert wurde, um den Zustand von wenigstens einem weiteren Bilderzeugungsgeräte zu erfassen, **dadurch gekennzeichnet,**
**dass** der Abschnitt der Energieversorgungssteuerung weiterhin zum Steuern des Betriebsmodus der besagten Bilderzeugungsgeräts basierend auf einer Kombination des besagten Zustands von den besagten mindestens zwei Computergeräten und einem Zustand des besagten weiteren Bilderzeugungsgeräts konfiguriert wird.

## Revendications

1. Un appareil de formation d'images relié à une multitude d'appareils informatiques via un réseau comprenant;
une section de détection configurée pour détecter un état d'au moins deux appareils informatiques hors de ladite multitude d'appareils informatiques; et
une section de commande de l'alimentation électrique configurée pour commander un mode d'alimentation dudit appareil de formation d'images en se basant sur ledit état mentionné des deux ordinateurs mentionnés par ladite section de détection ;
**caractérisée en ce que**
ledit état desdits deux appareils informatiques soit "normal", "déconnecté" ou "mis hors tension" ;
lesdits deux ordinateurs ont été affectés à des rangs différents en ce qui concerne une influence dudit état sur ledit contrôle dudit mode de puissance dudit appareil de formation d'images;
et que l'influence d'un ordinateur avec un rang plus élevé sur ledit contrôle dudit mode de puissance dudit appareil de formation d'images soit supérieure à ladite influence d'un ordinateur avec un rang inférieur.

2. L'appareil de formation d'images de la revendication 1,
dans lequel ledit mode d'alimentation dudit appareil de formation d'images comprend au moins un mode normal sans aucune économie de puissance électrique, un premier mode d'économie d'énergie électrique et un deuxième mode d'économie d'énergie, réduisant davantage une consommation électrique au-dessous de la consommation d'énergie dans ledit premier mode d'économie d'énergie ;
**caractérisé en ce que**
ladite section de commande d'alimentation électrique détermine s'il faut commuter ledit mode de puissance normal audit premier mode d'économie d'énergie ou audit deuxième mode d'économie de puissance, en se basant uniquement sur l'état dudit ordinateur avec un ordinateur de rang supérieur si ledit ordinateur avec un rang supérieur est en mode « normal ».

3. L'appareil de formation d'images de la revendication 2, comprenant en outre;
une section d'affichage ; et une section d'impression,
**caractérisées en ce que**
ledit premier mode d'économie de puissance est un mode qui décommute l'alimentation électrique dans ladite section d'affichage et
ledit deuxième mode d'économie de puissance est un mode qui décommute l'alimentation de puissance sur ladite section d'impression en plus de la dite alimentation de puissance dans ladite section d'affichage.

4. L'appareil de formation d'images de la revendication 1,
**caractérisé en ce que**
ladite section de commande d'alimentation électrique détermine s'il faut commuter ledit mode d'alimentation électrique normal audit premier mode d'économie d'énergie ou audit deuxième mode d'économie d'énergie, en se basant sur l'état dudit ordinateur avec un ordinateur de rang plus élevé et l'état dudit ordinateur avec un rang inférieur si ledit ordinateur doté d'un rang supérieur est en état « déconnecté» ou « hors tension ».

5. L'appareil de formation d'images de la revendication 1 à 4, comprenant en outre ;
un rang déterminant la section configurée pour déterminer ledit rang desdits au moins deux appareils informatiques en se basant sur une information de l'historique des tâches de chacun desdits appareils informatiques.

6. L'appareil de formation d'images de la revendication 5,
**caractérisé en ce que** ledit rang déterminant la section est configuré de sorte à déterminer ladite position desdits au moins deux appareils informatiques en se basant sur si chaque appareil informatique a envoyé une tâche ou pas jusqu'à un temps prescrit avant un moment actuel.

7. L'appareil de formation d'images de la revendication 5,
**caractérisé en ce que** ledit rang déterminant la section est configuré de sorte à déterminer ledit rang desdits au moins deux appareils informatiques en se basant sur un nombre d'impressions de chaque appareil informatique pendant un temps prescrit.

8. L'appareil de formation d'images de la revendication 5,
**caractérisé en ce que** ledit rang déterminant la section est configuré de sorte à déterminer ledit rang desdits au moins deux appareils informatiques en se basant sur un nombre d'impressions pendant un temps prescrit avant un moment actuel.

9. L'appareil de formation d'images de la revendication 5,
**caractérisé en ce que** ledit rang déterminant la section est configuré de sorte à déterminer ledit rang desdits au moins deux appareils informatiques en se basant sur une information de l'historique des tâches pour chacun desdits au moins deux appareils informatiques, et un attribut d'utilisateur pour chacun desdits au moins deux appareils informatiques.

10. L'appareil de formation d'images de la revendication 1, '
dans lequel dans le cas qu'il y ait au moins un autre appareil de formation d'images connecté à ladite section de détection du réseau qui est encore configuré pour détecter l'état dudit au moins autre appareil de formation d'images
**caractérisé en ce que** ;
ladite section de commande d'alimentation électrique est encore configurée pour contrôler ledit mode de puissance dudit appareil de formation d'images, en se basant sur une combinaison dudit état desdits au moins deux appareils informatiques et un état dudit autre appareil de formation d'images.
